# FASCICULE DE BREVET EUROPEEN

(11) **EP 3 311 719 B1**
(45) Date de publication et mention de la délivrance du brevet: **05.06.2019**
(21) Numéro de dépôt: 17197781.2
(22) Date de dépôt: 23.10.2017
(51) Int. Cl.: A47J 43/07, A47J 43/044

(54) **APPAREIL ELECTROMENAGER DE PREPARATION CULINAIRE PRESENTANT UN CONDUIT D'EVACUATION**
ELEKTROHAUSHALTSGERÄT ZUR ESSENSZUBEREITUNG, DAS EINE ENTLÜFTUNGSLEITUNG AUFWEIST
ELECTRICAL KITCHEN APPLIANCE HAVING A DISCHARGE DUCT

(30) Priorité: 24.10.2016 FR 1660294
(43) Date de publication de la demande: 25.04.2018
(73) Titulaire: SEB S.A., 69130 Ecully (FR)
(72) Inventeur: CHARLES, Patrick, 65290 LOUEY (FR); ROUCHES, Alexandre, 65310 HORGUES (FR); GERARD, Emmanuel, 61410 COUTERNE (FR)
(74) Mandataire: Bourrières, Patrice

(56) Documents cités:
- CN-A- 104 414 517
- US-A- 3 739 938

## Description

La présente invention concerne le domaine technique des appareils électroménagers de préparation culinaire comportant un récipient de travail, un accessoire de travail rotatif agencé dans le récipient de travail, et un boîtier motorisé supérieur disposé au dessus du récipient de travail pour entraîner en rotation l'accessoire de travail rotatif selon un axe de rotation, dans lesquels un couvercle intermédiaire est agencé entre le récipient de travail et le boîtier motorisé supérieur.

La présente invention concerne notamment, mais non exclusivement, les appareils électroménagers de préparation culinaire chauffants du type précité.

Il est connu du document CN104414517 un appareil électroménager de préparation culinaire chauffant comportant un récipient de travail, un boîtier motorisé supérieur pour entraîner en rotation un accessoire de travail rotatif, une enceinte de travail étant définie par le récipient de travail et un couvercle intermédiaire, dans lequel le couvercle intermédiaire présente un conduit d'évacuation mettant en communication l'enceinte de travail avec l'extérieur de l'appareil. Un tel appareil peut être utilisé pour réaliser des préparations liquides. Toutefois dans ce document l'admission du conduit d'évacuation est disposée très près de la paroi latérale intérieure du récipient de travail. Il en résulte que les préparations liquides entraînées en rotation dans l'enceinte de travail peuvent remonter le long de la paroi latérale intérieure du récipient de travail et atteindre le conduit d'évacuation. Cette construction génère un risque de débordement hors de l'enceinte de travail.

Un objet de la présente invention est de proposer un appareil électroménager de préparation culinaire du type précité, qui présente une construction permettant d'éviter que les remontées de liquide le long de la paroi latérale du récipient de travail puissent sortir de l'enceinte de travail par le conduit d'évacuation.

Cet objet est atteint avec un appareil électroménager de préparation culinaire comportant un récipient de travail, un accessoire de travail rotatif disposé dans le récipient de travail, un boîtier motorisé supérieur pour entraîner en rotation l'accessoire de travail rotatif selon un axe de rotation, un couvercle intermédiaire porté par le récipient de travail, une enceinte de travail étant définie par le récipient de travail et le couvercle intermédiaire, le couvercle intermédiaire présentant un conduit d'évacuation mettant en communication l'enceinte de travail avec l'extérieur de l'appareil, le conduit d'évacuation comportant une admission communiquant avec l'enceinte de travail et une évacuation communiquant avec l'extérieur de l'appareil, du fait que le couvercle intermédiaire comporte une paroi latérale déflectrice agencée entre une paroi latérale intérieure du récipient de travail et l'admission, que la paroi latérale déflectrice s'étend autour de l'axe de rotation, et que la distance entre la paroi latérale intérieure et la paroi latérale déflectrice est supérieure à 5% de la distance entre la paroi latérale intérieure et l'axe de rotation,

De préférence, la distance entre la paroi latérale intérieure et la paroi latérale déflectrice est supérieure à 10% de la distance entre la paroi latérale intérieure et l'axe de rotation.

De ce fait, la paroi latérale déflectrice entoure l'admission du conduit d'évacuation. Cette disposition permet de réaliser un écran efficace autour de l'admission. Lors de l'utilisation de l'appareil, la rotation de l'accessoire de travail rotatif peut faire remonter les préparations liquides le long de la paroi latérale intérieure du récipient de travail. La distance entre la paroi latérale intérieure du récipient de travail et la paroi latérale déflectrice du couvercle intermédiaire permet aux préparations liquides de remonter entre la paroi latérale intérieure et la paroi latérale déflectrice, sans que les préparations liquides atteignent l'admission du conduit d'évacuation. Les préparations liquides atteignant la face inférieure du couvercle intermédiaire peuvent retomber par gravité dans le récipient de travail en étant guidées par la paroi latérale déflectrice. La paroi latérale déflectrice forme ainsi un écran qui empêche que les préparations liquides remontant le long de la paroi latérale intérieure atteignent l'admission du conduit d'évacuation.

Avantageusement, la paroi latérale déflectrice ménage un espace annulaire avec la paroi latérale intérieure.

Ainsi les préparations liquides entraînées par l'accessoire de travail rotatif peuvent remonter le long de la paroi latérale intérieure du récipient de travail et circuler dans ledit espace annulaire. Les préparations liquides retombent alors par gravité dans le récipient de travail, sans atteindre ladite admission.

Avantageusement encore, le couvercle intermédiaire porte un organe de transmission rotatif entrainé en rotation par le boîtier motorisé supérieur et entraînant en rotation l'accessoire de travail rotatif disposé dans le récipient de travail.

Cette disposition permet de mieux protéger le boîtier motorisé supérieur des projections d'aliments.

Avantageusement encore, le couvercle intermédiaire comprend un joint annulaire venant en appui périphérique à l'intérieur du récipient de travail et l'évacuation débouche au dessus du joint annulaire.

Cette disposition permet de mieux confiner les préparations liquides à l'intérieur de l'enceinte de travail.

Avantageusement alors, le joint annulaire comporte une lèvre annulaire venant en appui périphérique à l'intérieur du récipient de travail.

Cette disposition permet d'obtenir une bonne étanchéité entre le récipient de travail et le couvercle intermédiaire, même lorsque le récipient de travail présente des dispersions de construction importantes.

Avantageusement alors, le joint annulaire comporte une autre lèvre annulaire s'étendant au dessus de la lèvre annulaire.

Cette disposition permet de faciliter la mise en place du joint annulaire. Cette disposition contribue ainsi à l'obtention d'une bonne étanchéité entre le récipient de travail et le couvercle intermédiaire.

Avantageusement encore, l'admission présente une échancrure latérale agencée entre la paroi latérale déflectrice et l'axe de rotation.

Cette disposition permet d'augmenter la section de l'admission, tout en conservant une bonne protection contre les remontées de liquides.

Avantageusement encore, l'évacuation débouche dans une paroi latérale extérieure du couvercle intermédiaire hors de l'enceinte de travail.

Cette disposition permet de protéger le boîtier motorisé supérieur des projections de liquides.

Avantageusement encore, le récipient de travail présente un fond et comporte un organe de centrage s'élevant à partir du fond, et l'accessoire de travail rotatif est monté sur l'organe de centrage.

Selon une forme de réalisation avantageuse, l'appareil électroménager de préparation culinaire comporte un dispositif de chauffe électrique pour chauffer les aliments contenus dans le récipient de travail.

L'agencement de l'admission du conduit d'évacuation permet un échappement de la vapeur générée à l'intérieur de l'enceinte de travail, tout en confinant les préparations liquides entraînées par l'accessoire de travail rotatif.

Avantageusement encore, l'appareil électroménager de préparation culinaire comporte une base recevant le récipient de travail.

Avantageusement alors, le dispositif de chauffe électrique est porté par le récipient de travail et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement encore, la base comporte un montant présentant un connecteur électrique de motorisation pour alimenter électriquement le boîtier motorisé supérieur.

Avantageusement encore, le couvercle intermédiaire présente un autre conduit d'évacuation mettant en communication l'enceinte de travail avec l'extérieur de l'appareil, l'autre conduit d'évacuation comportant une autre admission communiquant avec l'enceinte de travail et une autre évacuation communiquant avec l'extérieur de l'appareil, l'autre l'admission étant agencée entre la paroi latérale déflectrice et l'axe de rotation.

Cette disposition permet d'augmenter les possibilités d'évacuation hors de l'enceinte de travail.

Avantageusement alors, l'axe de rotation est agencé entre l'admission et l'autre admission.

Cette disposition permet d'améliorer les possibilités d'évacuation hors de l'enceinte de travail.

Avantageusement encore, l'autre admission présente une autre échancrure latérale agencée entre la paroi latérale déflectrice et l'axe de rotation.

Cette disposition permet d'augmenter la section de l'autre admission, tout en conservant une bonne protection contre les remontées de liquides.

Avantageusement encore, l'autre évacuation débouche dans la paroi latérale extérieure du couvercle intermédiaire.

Cette disposition permet de protéger le boîtier motorisé supérieur des projections de liquides.

Avantageusement encore l'autre évacuation débouche au dessus du joint annulaire.

Cette disposition permet de mieux confiner les préparations liquides à l'intérieur de l'enceinte de travail.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 à 13 sont des vues en perspective de dessus, de dessous et de côté du couvercle intermédiaire de l'appareil électroménager de préparation culinaire illustré sur la figure 1,
- la figure 14 est une vue de dessus du récipient de travail illustré sur les figures 7 et 8 portant le couvercle intermédiaire illustré sur les figures 9 à 13,
- la figure 15 est une vue partielle en élévation et en coupe du récipient de travail illustré sur les figures 7 et 8 portant le couvercle intermédiaire illustré sur les figures 9 à 13, selon une première orientation,
- la figure 16 est une vue en élévation et en coupe du récipient de travail illustré sur les figures 7 et 8 portant le couvercle intermédiaire illustré sur les figures 9 à 13, selon une deuxième orientation,
- les figures 17 et 18 sont des vues en perspective de dessous et de dessus du boîtier motorisé supérieur de l'appareil électroménager de préparation culinaire illustré sur la figure 1.

L'appareil électroménager de préparation culinaire illustré sur les figures comporte une base 1, un récipient de travail 2, un couvercle intermédiaire 3, un boîtier motorisé supérieur 4, ainsi que des accessoires de préparation 5.

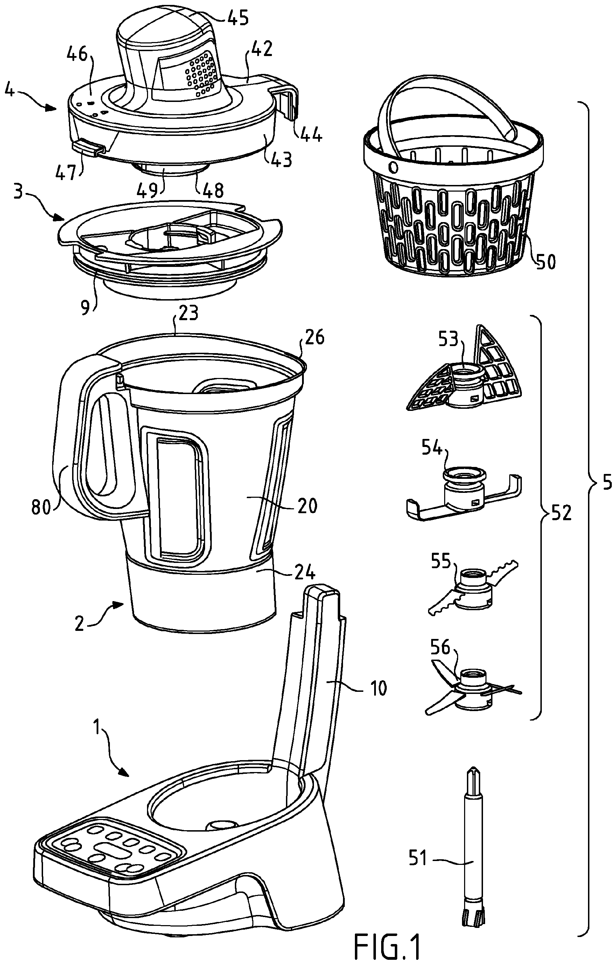

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

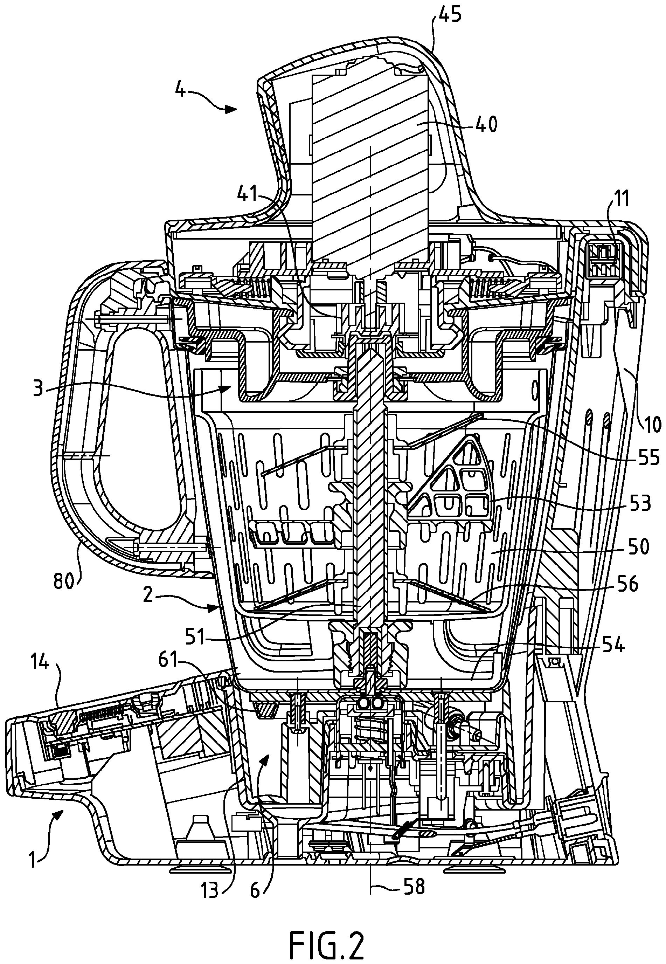

Les accessoires de préparation 5 peuvent être rangés dans le récipient de travail 2, tel que montré sur la figure 2.

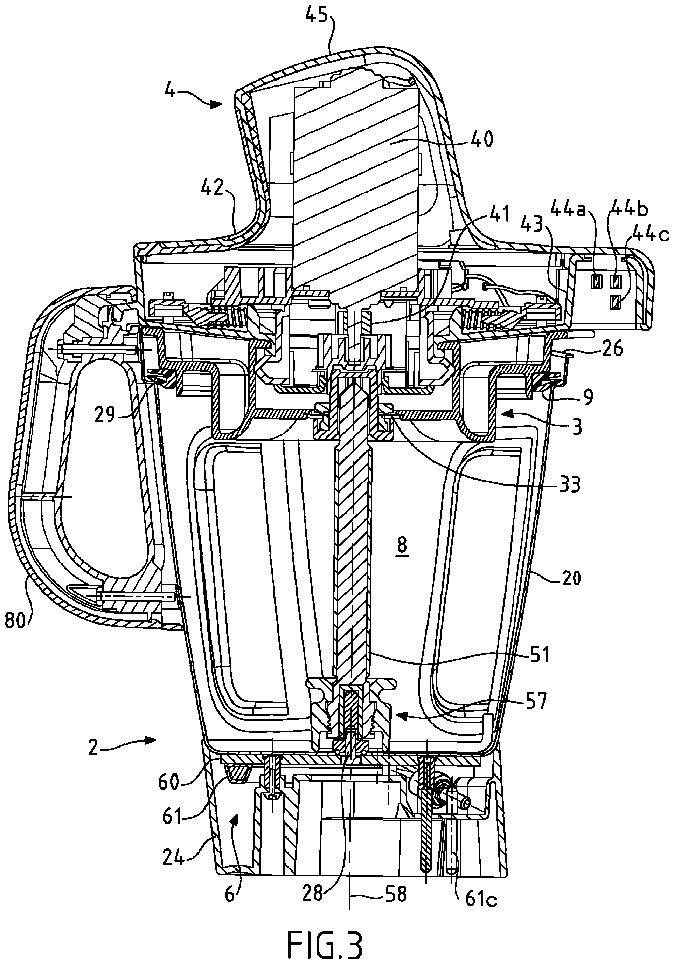

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3.

Selon une forme de réalisation avantageuse, le couvercle intermédiaire 3 comprend un joint annulaire 9, mieux visible sur la figure 3. Le joint annulaire 9 vient en appui périphérique à l'intérieur du récipient de travail 2.

L'appareil électroménager de préparation culinaire selon l'invention comprend une enceinte de travail 8 définie par le récipient de travail 2 et le couvercle intermédiaire 3.

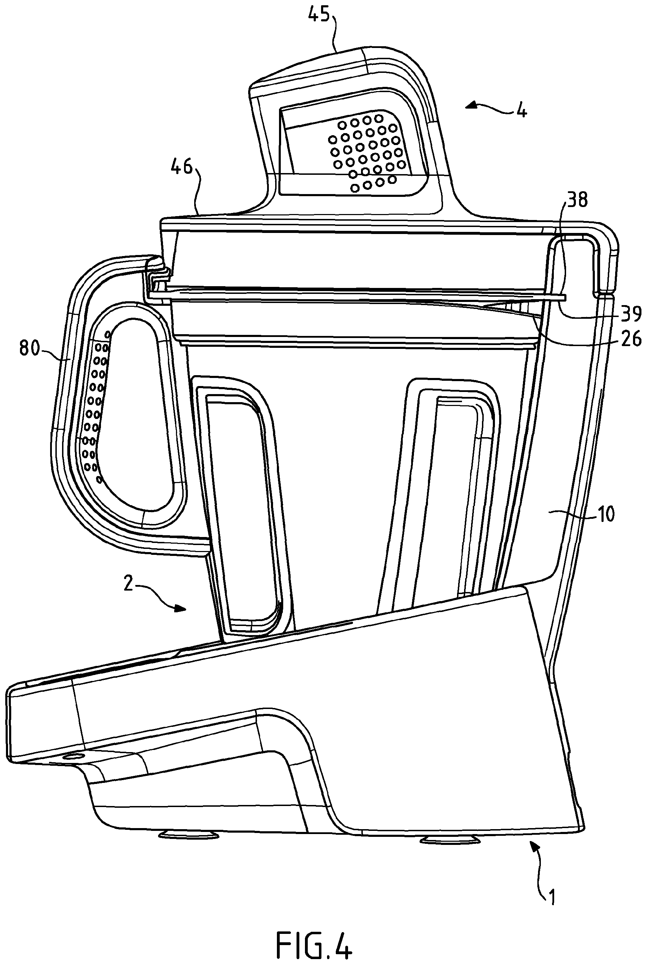

Le boîtier motorisé supérieur 4 est disposé sur le couvercle intermédiaire 3. La base 1 reçoit le récipient de travail 2, tel que montré sur la figure 4.

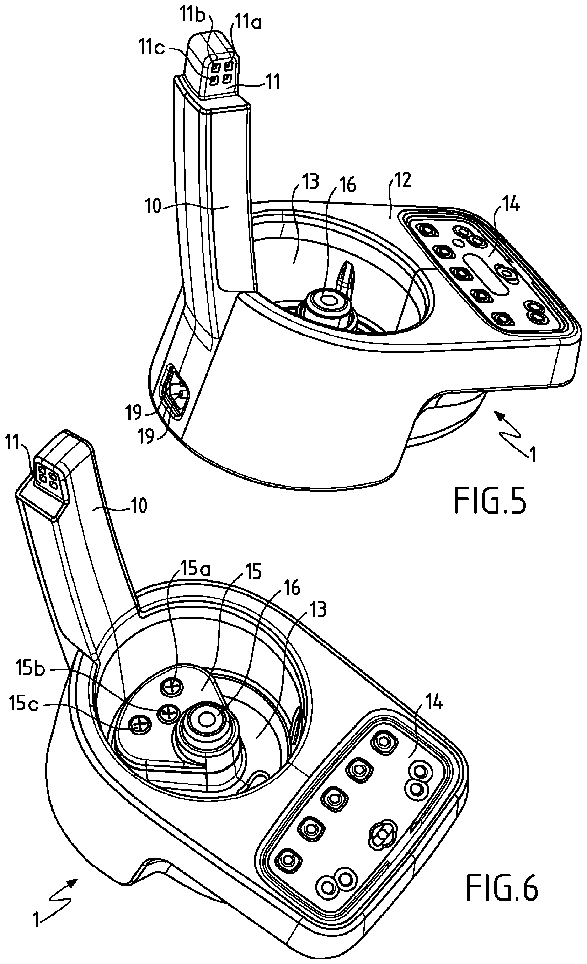

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire selon l'invention comporte avantageusement un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

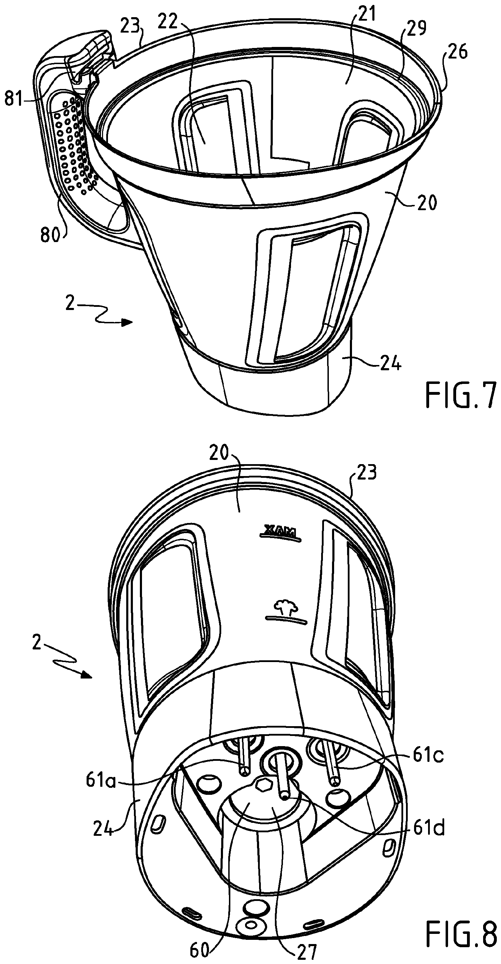

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

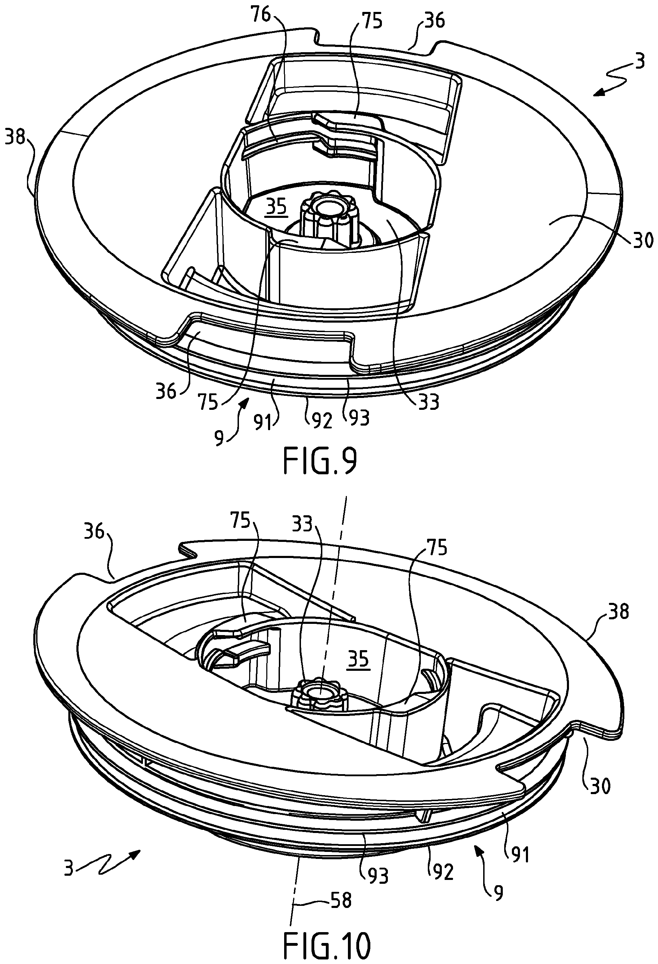

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes de retenue 76 agencés dans le logement central 35. Les organes de retenue 76 et les collerettes internes 75 sont agencés de manière opposée. Les organes de retenue 76 sont décalés axialement et latéralement par rapport aux collerettes internes 75.

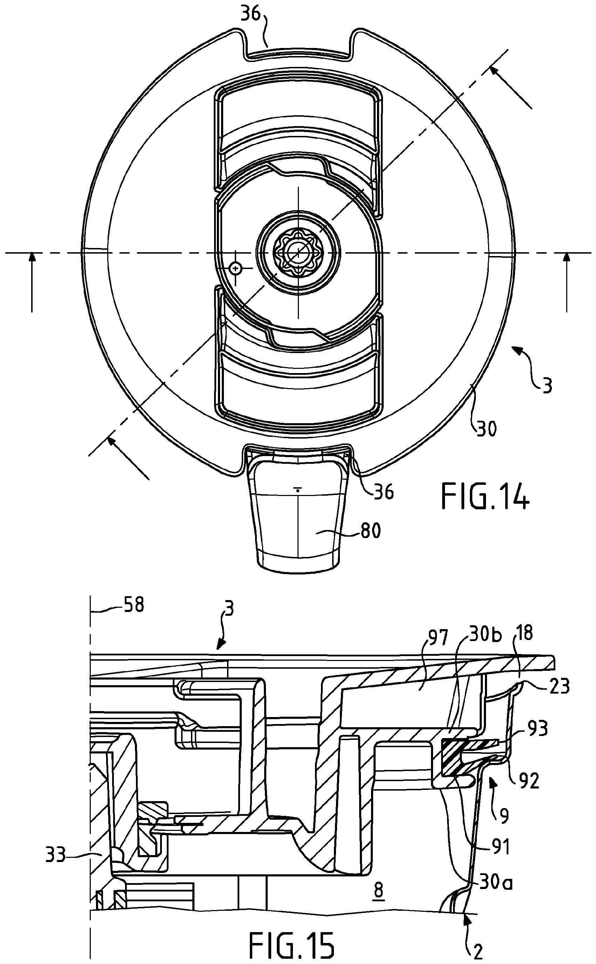

Le couvercle intermédiaire 3 est bloqué en rotation par rapport au récipient de travail 2. A cet effet le corps 30 présente deux échancrures périphériques 36. L'une des échancrures périphériques 36 reçoit la poignée 80, tel que montré sur la figure 14, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

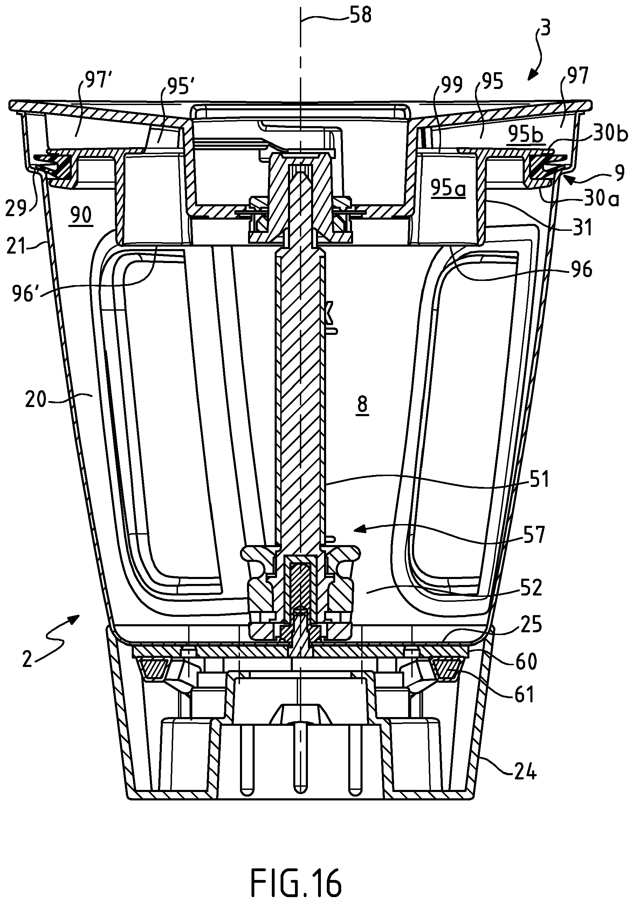

Le couvercle intermédiaire 3 présente un conduit d'évacuation 95 mettant en communication l'enceinte de travail 8 avec l'extérieur de l'appareil, tel que visible sur les figures 16 et 15. De préférence, la section du conduit d'évacuation reste en tout point supérieure à 1 cm², avec une largeur supérieure à 4 mm, pour éviter que les aliments ne bouchent le conduit d'évacuation. Le conduit d'évacuation 95 traverse le corps 30 du couvercle intermédiaire 3. Le couvercle intermédiaire 3 présente une paroi latérale déflectrice 31 s'étendant à distance de la paroi latérale intérieure 21 du récipient de travail 2, tel que visible sur la figure 16.

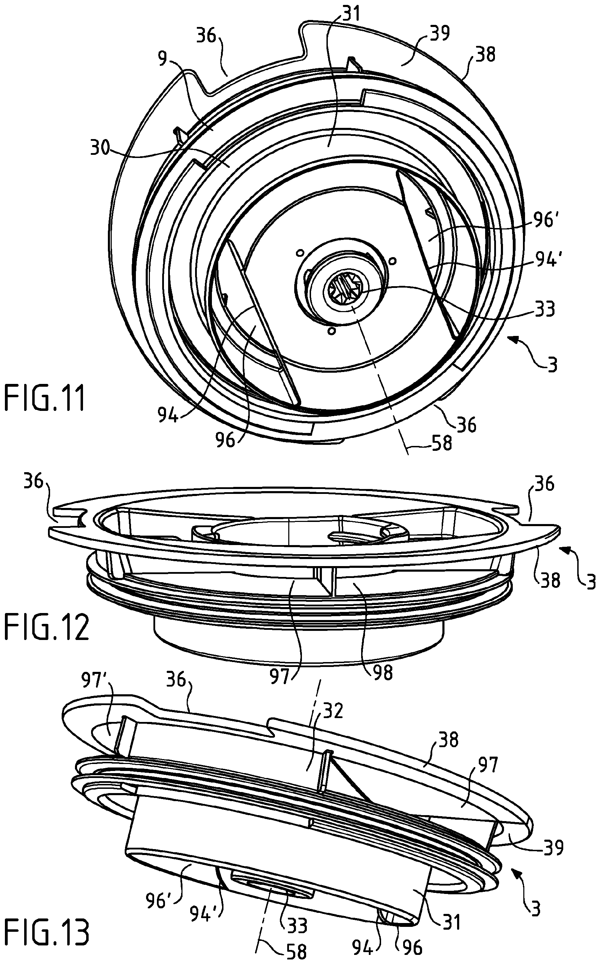

Plus particulièrement dans l'exemple de réalisation illustré sur les figures, la paroi latérale déflectrice 31 est annulaire et s'étend autour de l'axe de rotation 58, tel que bien visible sur les figures 11 et 13. La paroi latérale déflectrice 31 ménage un espace annulaire 90 avec la paroi latérale intérieure 21 du récipient de travail 20.

Le conduit d'évacuation 95 comporte une admission 96, visible sur les figures 11, 13 et 16, et une évacuation 97, visible sur les figures 12, 13 et 15.

Tel que bien visible sur la figure 16, l'admission 96 du conduit d'évacuation 95 communique avec l'enceinte de travail 8. La paroi latérale déflectrice 31 est agencée entre la paroi latérale intérieure 21 du récipient de travail 2 et l'admission 96. L'admission 96 est agencée entre la paroi latérale déflectrice 31 et l'axe de rotation 58.

La distance entre la paroi latérale intérieure 21 et la paroi latérale déflectrice 31 est supérieure à 5% de la distance entre la paroi latérale intérieure 21 et l'axe de rotation 58, et de préférence supérieure à 10% de la distance entre la paroi latérale intérieure 21 et l'axe de rotation 58.

Dans l'exemple de réalisation illustré sur les figures, la distance entre la paroi latérale intérieure 21 et la paroi latérale déflectrice 31 est supérieure à 20% de la distance entre la paroi latérale intérieure 21 et l'axe de rotation 58.

Plus particulièrement dans l'exemple de réalisation illustré sur les figures, l'admission 96 est ménagée dans la face inférieure du corps 30. L'admission 96 présente une ouverture inférieure. L'admission 96 est agencée au dessus du fond 25 du récipient de travail 2. L'admission 96 présente une échancrure latérale 94 agencée entre la paroi latérale déflectrice 31 et l'axe de rotation 58. Le conduit d'évacuation 95 présente ainsi une entrée protégée de manière périphérique par la paroi latérale déflectrice 31.

Tel que bien visible sur la figure 15, l'évacuation 97 du conduit d'évacuation 95 communique avec l'extérieur de l'appareil. Tel que montré sur la figure 15, l'évacuation 97 du conduit d'évacuation 95 débouche en regard de la paroi latérale intérieure 21 du récipient de travail 2 à distance d'un échappement 18 vers l'extérieur de l'appareil.

Plus particulièrement dans l'exemple de réalisation illustré sur les figures, l'évacuation 97 débouche dans une paroi latérale extérieure 32 du couvercle intermédiaire 3. Tel que visible sur la figure 12, l'évacuation 97 débouche sous la bordure extérieure 38. L'évacuation 97 s'étend sur plus du quart de la périphérie du couvercle intermédiaire 3. Pour une meilleure rigidité du couvercle intermédiaire 3 le conduit d'évacuation 95 peut être pourvu d'au moins une nervure interne 98. Le conduit d'évacuation 95 présente ainsi deux sorties au niveau de l'évacuation 97.

Plus particulièrement dans l'exemple de réalisation illustré sur les figures, le décrochement supérieur 26 du bord supérieur 23 du récipient de travail 2 ménage l'échappement 18. Tel que visible sur les figures 3 et 4, le décrochement supérieur 26 est adjacent au montant 10. Le décrochement supérieur 26 s'étend de part et d'autre du montant 10. L'échappement 18 est ménagé entre le récipient de travail 2 et le couvercle intermédiaire 3.

Tel que visible sur les figures 16 et 15, le conduit d'évacuation 95 présente une première portion 95a principalement verticale prolongeant l'admission 96 et une deuxième portion 95b principalement horizontale conduisant à l'évacuation 97. La première portion 95a communique avec la deuxième portion 95b par un passage 99.

Le joint annulaire 9 est monté autour du corps 30 entre une bordure d'appui inférieure 30a et une bordure d'appui supérieure 30b. L'évacuation 97 du conduit d'évacuation 95 débouche au dessus du joint annulaire 9.

Plus particulièrement dans l'exemple de réalisation illustré sur les figures, le joint annulaire 9 comporte une couronne 91 montée entre la bordure d'appui inférieure 30a et la bordure d'appui supérieure 30b. Le joint annulaire 9 comporte une lèvre annulaire 92. Ainsi le joint annulaire 9 est un joint à lèvre. La lèvre annulaire 92 est issue de la couronne 91. Selon une forme de réalisation préférée, le joint annulaire 9 comporte une autre lèvre annulaire 93. L'autre lèvre annulaire 93 est issue de la couronne 91. L'autre lèvre annulaire 93 s'étend au dessus de la lèvre annulaire 92. Ainsi la lèvre annulaire 92 et l'autre lèvre annulaire 93 sont superposées.

Tel que visible sur la figure 3, le joint annulaire 9 vient en appui sur le décrochement annulaire 29 du récipient de travail 2. Plus particulièrement, la lèvre annulaire 92 vient en appui sur le décrochement annulaire 29.

Tel que visible sur la figure 16, le couvercle intermédiaire 3 présente un autre conduit d'évacuation 95' mettant en communication l'enceinte de travail 8 avec l'extérieur de l'appareil. L'autre conduit d'évacuation 95' comporte une autre admission 96' communiquant avec l'enceinte de travail 8 et une autre évacuation 97' communiquant avec l'extérieur de l'appareil.

L'autre l'admission 96' est agencée entre la paroi latérale déflectrice 31 et l'axe de rotation 58. L'autre admission 96' présente une ouverture inférieure. L'axe de rotation 58 est agencé entre l'admission 96 et l'autre admission 96'. L'autre admission 96' présente une autre échancrure latérale 94' agencée entre la paroi latérale déflectrice 31 et l'axe de rotation 58.

L'autre évacuation 97' débouche en regard de la paroi latérale intérieure 21 à distance de l'échappement 18 vers l'extérieur de l'appareil. L'autre évacuation 97' débouche dans la paroi latérale extérieure 32. L'autre évacuation 97' débouche au dessus du joint annulaire 9. L'autre évacuation 97' débouche sous la bordure extérieure 38. Les échancrures périphériques 36 sont agencées entre l'évacuation 97 et l'autre évacuation 97'. L'axe de rotation 58 est agencé entre l'évacuation 97 et l'autre évacuation 97'.

Le couvercle intermédiaire 3 présente avantageusement une symétrie d'ordre 2 par rapport à l'axe de rotation 58.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférentielle 46 du boîtier motorisé supérieur 4, tel que visible sur les figures 1 à 4. Le capot inférieur 43 présente une partie centrale inférieure 48 proéminente.

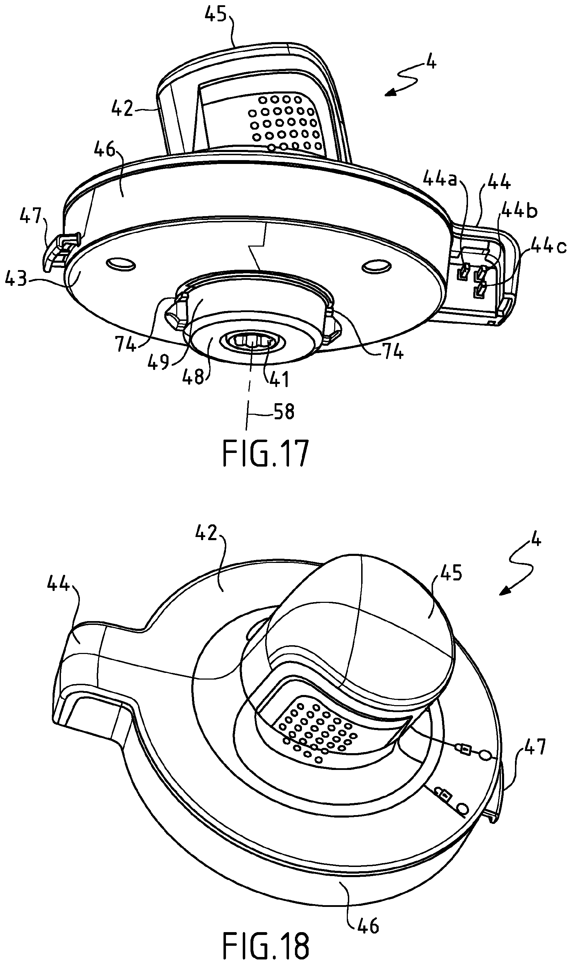

Tel que visible sur la figure 17, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

Le boîtier motorisé supérieur 4 comporte une patte de verrouillage 47 agencée en périphérie de la partie circonférentielle 46. Plus particulièrement, la patte de verrouillage 47 est agencée à l'opposé du prolongement 44, tel que bien visible sur la figure 18.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur une paroi latérale 49 de la partie centrale inférieure 48 du boîtier motorisé supérieur 4.

Le boîtier motorisé supérieur 4 est verrouillé avec le montant 10 par rotation autour de l'axe de rotation 58. Le boîtier motorisé supérieur 4 est verrouillé avec le récipient de travail 2 par rotation autour de l'axe de rotation 58. Le boîtier motorisé supérieur 4 est verrouillé avec la poignée 80 du récipient de travail 2 par rotation autour de l'axe de rotation 58. La patte de verrouillage 47 du boîtier motorisé supérieur 4 est engagée dans un logement de verrouillage 81 de la poignée 80. Le boîtier motorisé supérieur 4 est verrouillé de manière opposée d'une part avec le montant 10 et d'autre part avec le récipient de travail 2, par rotation autour de l'axe de rotation 58.

L'appareil électroménager de préparation culinaire illustré sur les figures s'utilise et fonctionne de la manière suivante.

L'utilisateur dispose les aliments dans le récipient de travail 2 contenant l'accessoire de travail rotatif 57, met en place le couvercle intermédiaire 3 et le boîtier motorisé supérieur 4, et met en marche l'appareil.

Lorsque les aliments contenus dans le récipient de travail 2 ont une consistance liquide, la rotation de l'accessoire de travail rotatif 57 peut créer un vortex à l'intérieur du récipient de travail 2. Le liquide s'élève alors à l'intérieur de l'enceinte de travail 8 jusqu'à atteindre l'espace annulaire 90 sous le couvercle intermédiaire 3. Si le niveau du liquide tend à s'élever encore davantage le long de la paroi latérale intérieure 21 du récipient de travail 2, la paroi latérale déflectrice 31 du couvercle intermédiaire 3 forme un écran protégeant l'admission 96 du conduit d'évacuation 95 ainsi que l'autre admission 96' de l'autre conduit d'évacuation 95'. La partie centrale inférieure du couvercle intermédiaire 3 présentant l'admission 96 et l'autre admission 96' n'est pas atteinte par le liquide entraîné en rotation par l'accessoire de travail rotatif 57. Lorsque le dispositif de chauffe électrique 6 est utilisé, la vapeur générée lors de la chauffe des aliments peut ainsi s'échapper sans difficulté par le conduit d'évacuation 95 et/ou par l'autre conduit d'évacuation 95', en limitant les risques de débordement hors du récipient de travail 2.

A titre de variante, la paroi latérale déflectrice 31 n'entoure pas nécessairement l'admission 96 et l'autre admission 96'. L'appareil peut notamment comporter une portion de paroi latérale déflectrice agencée entre la paroi latérale intérieure 21 du récipient de travail 2 et l'admission 96, et une autre portion de paroi latérale déflectrice agencée entre la paroi latérale intérieure 21 du récipient de travail 2 et l'autre admission 96'.

A titre de variante, l'appareil électroménager de préparation culinaire selon l'invention ne comporte pas nécessairement une base 1 alimentant électriquement un dispositif de chauffe électrique 6 porté par le récipient de travail 2. Le dispositif de chauffe électrique 6 peut notamment être porté par la base 1, pour chauffer le récipient de travail 2 disposé sur la base 1.

A titre de variante, l'appareil électroménager de préparation culinaire selon l'invention ne comporte pas nécessairement une base 1 alimentant électriquement le boîtier motorisé supérieur 4. Le boîtier motorisé supérieur 4 peut notamment comporter ou recevoir un cordon d'alimentation électrique.

A titre de variante, l'appareil électroménager de préparation culinaire selon l'invention ne comporte pas nécessairement un dispositif de chauffe électrique 6.

A titre de variante, le conduit d'évacuation 95 et/ou l'autre conduit d'évacuation 95' peu(ven)t présenter au moins une entrée et/ou au moins une sortie.

A titre de variante, l'appareil électroménager de préparation culinaire selon l'invention ne comporte pas nécessairement un autre conduit d'évacuation 95'.

La présente invention n'est nullement limitée à l'exemple de réalisation décrit et à ses variantes, mais englobe de nombreuses modifications dans le cadre des revendications.

## Revendications

1. Appareil électroménager de préparation culinaire comportant un récipient de travail (2), un accessoire de travail rotatif (57) disposé dans le récipient de travail (2), un boîtier motorisé supérieur (4) pour entraîner en rotation l'accessoire de travail rotatif (57) selon un axe de rotation (58), un couvercle intermédiaire (3) porté par le récipient de travail (2), une enceinte de travail (8) étant définie par le récipient de travail (2) et le couvercle intermédiaire (3), le couvercle intermédiaire (3) présentant un conduit d'évacuation (95) mettant en communication l'enceinte de travail (8) avec l'extérieur de l'appareil, le conduit d'évacuation (95) comportant une admission (96) communiquant avec l'enceinte de travail (8) et une évacuation (97) communiquant avec l'extérieur de l'appareil, **caractérisé en ce que** le couvercle intermédiaire (3) comporte une paroi latérale déflectrice (31) agencée entre une paroi latérale intérieure (21) du récipient de travail (2) et l'admission (96), **en ce que** la paroi latérale déflectrice (31) s'étend autour de l'axe de rotation (58), et **en ce que** la distance entre la paroi latérale intérieure (21) et la paroi latérale déflectrice (31) est supérieure à 5% de la distance entre la paroi latérale intérieure (21) et l'axe de rotation (58).

2. Appareil électroménager de préparation culinaire selon la revendication 1, **caractérisé en ce que** la distance entre la paroi latérale intérieure (21) et la paroi latérale déflectrice (31) est supérieure à 10% de la distance entre la paroi latérale intérieure (21) et l'axe de rotation (58).

3. Appareil électroménager de préparation culinaire selon l'une des revendications 1 ou 2, **caractérisé en ce que** la paroi latérale déflectrice (31) ménage un espace annulaire (90) avec la paroi latérale intérieure (21).

4. Appareil électroménager de préparation culinaire selon l'une des revendications 1 à 3, **caractérisé en ce que** le couvercle intermédiaire (3) porte un organe de transmission rotatif (33) entrainé en rotation par le boîtier motorisé supérieur (4) et entraînant en rotation l'accessoire de travail rotatif (57) disposé dans le récipient de travail (2).

5. Appareil électroménager de préparation culinaire selon l'une des revendications 1 à 4, **caractérisé en ce que** le couvercle intermédiaire (3) comprend un joint annulaire (9) venant en appui périphérique à l'intérieur du récipient de travail (2) et **en ce que** l'évacuation (97) débouche au dessus du joint annulaire (9).

6. Appareil électroménager de préparation culinaire selon la revendication 5, **caractérisé en ce que** le joint annulaire (9) comporte une lèvre annulaire (92) venant en appui périphérique à l'intérieur du récipient de travail (2).

7. Appareil électroménager de préparation culinaire selon la revendication 6, **caractérisé en ce que** le joint annulaire (9) comporte une autre lèvre annulaire (93) s'étendant au dessus de la lèvre annulaire (92).

8. Appareil électroménager de préparation culinaire selon l'une des revendications 1 à 7, **caractérisé en ce que** l'admission (96) présente une échancrure latérale (94) agencée entre la paroi latérale déflectrice (31) et l'axe de rotation (58).

9. Appareil électroménager de préparation culinaire selon l'une des revendications 1 à 8, **caractérisé en ce que** l'évacuation (97) débouche dans une paroi latérale extérieure (32) du couvercle intermédiaire (3).

10. Appareil électroménager de préparation culinaire selon l'une des revendications 1 à 9, **caractérisé en ce que** le récipient de travail (2) présente un fond (25) et comporte un organe de centrage (28) s'élevant à partir du fond (25), et **en ce que** l'accessoire de travail rotatif (57) est monté sur l'organe de centrage (28).

11. Appareil électroménager de préparation culinaire selon l'une des revendications 1 à 10, **caractérisé en ce qu'**il comporte un dispositif de chauffe électrique (6) pour chauffer les aliments contenus dans le récipient de travail (2).

12. Appareil électroménager de préparation culinaire selon l'une des revendications 1 à 11, **caractérisé en ce qu'**il comporte une base (1) recevant le récipient de travail (2).

13. Appareil électroménager de préparation culinaire selon les revendications 11 et 12, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

14. Appareil électroménager de préparation culinaire selon l'une des revendications 1 à 13, **caractérisé en ce que** le couvercle intermédiaire (3) présente un autre conduit d'évacuation (95') mettant en communication l'enceinte de travail (8) avec l'extérieur de l'appareil, l'autre conduit d'évacuation (95') comportant une autre admission (96') communiquant avec l'enceinte de travail (8) et une autre évacuation (97') communiquant avec l'extérieur de l'appareil, l'autre l'admission (96') étant agencée entre la paroi latérale déflectrice (31) et l'axe de rotation (58).

15. Appareil électroménager de préparation culinaire selon la revendication 14, **caractérisé en ce que** l'axe de rotation (58) est agencé entre l'admission (96) et l'autre admission (96').

## Patentansprüche

1. Elektrohaushaltseinrichtung zur Essenszubereitung, die einen Arbeitsbehälter (2), ein im Arbeitsbehälter (2) angeordnetes drehendes Arbeitszubehör (57), ein motorisiertes oberes Gehäuse (4), um das drehende Arbeitszubehör (57) um eine Drehachse (58) in Drehung zu versetzen, einen vom Arbeitsbehälter (2) getragenen Zwischendeckel (3) umfasst, wobei vom Arbeitsbehälter (2) und dem Zwischendeckel (3) eine Arbeitskammer (8) definiert wird, wobei der Zwischendeckel (3) eine Auslassleitung (95) aufweist, die die Arbeitskammer (8) mit der Außenumgebung der Einrichtung in Kommunikation bringt, wobei die Auslassleitung (95) einen Einlass (96), der mit der Arbeitskammer (8) kommuniziert, und einen Auslass (97) umfasst, der mit der Außenumgebung der Einrichtung kommuniziert, **dadurch gekennzeichnet, dass** der Zwischendeckel (3) eine seitliche Ablenkwand (31) umfasst, die zwischen einer seitlichen Innenwand (21) des Arbeitsbehälters (2) und dem Einlass (96) eingerichtet ist, dadurch, dass sich die seitliche Ablenkwand (31) um die Drehachse (58) herum erstreckt, und dadurch, dass der Abstand zwischen der seitlichen Innenwand (21) und der seitlichen Ablenkwand (31) mehr als 5 % des Abstands zwischen der seitlichen Innenwand (21) und der Drehachse (58) beträgt.

2. Elektrohaushaltseinrichtung zur Essenszubereitung nach Anspruch 1, **dadurch gekennzeichnet, dass** der Abstand zwischen der seitlichen Innenwand (21) und der seitlichen Ablenkwand (31) mehr als 10% des Abstands zwischen der seitlichen Innenwand (21) und der Drehachse (58) beträgt.

3. Elektrohaushaltseinrichtung zur Essenszubereitung nach einem der Ansprüche 1 oder 2, **dadurch gekennzeichnet, dass** die seitliche Ablenkwand (31) mit der seitlichen Innenwand (21) einen ringförmigen Raum (90) formt.

4. Elektrohaushaltseinrichtung zur Essenszubereitung nach einem der Ansprüche 1 bis 3, **dadurch gekennzeichnet, dass** der Zwischendeckel (3) ein drehendes Übertragungsglied (33) trägt, das vom motorisierten oberen Gehäuse (4) in Drehung versetzt wird und das drehende Arbeitszubehör (57), das im Arbeitsbehälter (2) angeordnet ist, in Drehung versetzt.

5. Elektrohaushaltseinrichtung zur Essenszubereitung nach einem der Ansprüche 1 bis 4, **dadurch gekennzeichnet, dass** der Zwischendeckel (3) eine ringförmige Dichtung (9) umfasst, die im Inneren des Arbeitsbehälters (2) umfangsmäßig in Anlage kommt, und dadurch, dass der Auslass (97) über der ringförmigen Dichtung (9) mündet.

6. Elektrohaushaltseinrichtung zur Essenszubereitung nach Anspruch 5, **dadurch gekennzeichnet, dass** die ringförmige Dichtung (9) eine ringförmige Lippe (92) umfasst, die im Inneren des Arbeitsbehälters (2) umfangsmäßig in Anlage kommt.

7. Elektrohaushaltseinrichtung zur Essenszubereitung nach Anspruch 6, **dadurch gekennzeichnet, dass** die ringförmige Dichtung (9) eine weitere ringförmige Lippe (93) umfasst, die sich über der ringförmigen Lippe (92) erstreckt.

8. Elektrohaushaltseinrichtung zur Essenszubereitung nach einem der Ansprüche 1 bis 7, **dadurch gekennzeichnet, dass** der Einlass (96) eine seitliche Aussparung (94) aufweist, die zwischen der seitlichen Ablenkwand (31) und der Drehachse (58) eingerichtet ist.

9. Elektrohaushaltseinrichtung zur Essenszubereitung nach einem der Ansprüche 1 bis 8, **dadurch gekennzeichnet, dass** der Auslass (97) in einer seitlichen Außenwand (32) des Zwischendeckels (3) mündet.

10. Elektrohaushaltseinrichtung zur Essenszubereitung nach einem der Ansprüche 1 bis 9, **dadurch gekennzeichnet, dass** der Arbeitsbehälter (2) einen Boden (25) aufweist und ein Zentrierglied (28) umfasst, das sich vom Boden (25) aus erstreckt, und dadurch, dass das drehende Arbeitszubehör (57) auf dem Zentrierglied (28) angebracht ist.

11. Elektrohaushaltseinrichtung zur Essenszubereitung nach einem der Ansprüche 1 bis 10, **dadurch gekennzeichnet, dass** es eine elektrische Heizvorrichtung (6) umfasst, um die im Arbeitsbehälter (2) enthaltenen Lebensmittel zu erhitzen.

12. Elektrohaushaltseinrichtung zur Essenszubereitung nach einem der Ansprüche 1 bis 11, **dadurch gekennzeichnet, dass** es eine Basis (1) umfasst, die den Arbeitsbehälter (2) aufnimmt.

13. Elektrohaushaltseinrichtung zur Essenszubereitung nach Ansprüche 11 und 12, **dadurch gekennzeichnet, dass** die elektrische Heizvorrichtung (6) vom Arbeitsbehälter (2) getragen wird, und dadurch, dass die Basis (1) einen elektrischen Heizverbinder (15) umfasst, um die elektrische Heizvorrichtung (6) elektrisch zu speisen, wenn der Arbeitsbehälter (2) auf der Basis (1) angeordnet ist.

14. Elektrohaushaltseinrichtung zur Essenszubereitung nach einem der Ansprüche 1 bis 13, **dadurch gekennzeichnet, dass** der Zwischendeckel (3) eine weitere Auslassleitung (95') aufweist, die die Arbeitskammer (8) mit der Außenumgebung der Einrichtung in Kommunikation bringt, wobei die weitere Auslassleitung (95') einen weiteren Einlass (96'), der mit der Arbeitskammer (8) kommuniziert, und einen weiteren Auslass (97') umfasst, der mit der Außenumgebung der Einrichtung kommuniziert, wobei der weitere Einlass (96') zwischen der seitlichen Ablenkwand (31) und der Drehachse (58) eingerichtet ist.

15. Elektrohaushaltseinrichtung zur Essenszubereitung nach Anspruch 14, **dadurch gekennzeichnet, dass** die Drehachse (58) zwischen dem Einlass (96) und dem weiteren Einlass (96') eingerichtet ist.

## Claims

1. Household electrical appliance for preparing food comprising a work container (2), a rotating work accessory (57) arranged in the work container (2), an upper motorised casing (4) to drive in rotation, the rotating work accessory (57) about a rotating axis (58), an intermediate cover (3) carried by the work container (2), a work enclosure (8) being defined by the work container (2) and the intermediate cover (3), the intermediate cover (3) having an evacuation conduit (95) connecting the work enclosure (8) to the outside of the appliance, the evacuation conduit (95) comprising an inlet (96) communicating with the work enclosure (8) and an evacuation (97) communicating with the outside of the appliance, **characterised in that** the intermediate cover (3) comprises a deflecting side wall (31) arranged between an inner side wall (21) of the work container (2) and the inlet (96), **in that** the deflecting side wall (31) extends about the rotating axis (58), and **in that** the distance between the inner side wall (21) and the deflecting side wall (31) is greater than 5 % of the distance between the inner side wall (21) and the rotating axis (58).

2. Household electrical appliance for preparing food according to claim 1, **characterised in that** the distance between the inner side wall (21) and the deflecting side wall (31) is greater than 10 % of the distance between the inner side wall (21) and the rotating axis (58).

3. Household electrical appliance for preparing food according to one of claims 1 or 2, **characterised in that** the deflecting side wall (31) arranges an annular space (90) with the inner side wall (21).

4. Household electrical appliance for preparing food according to one of claims 1 to 3, **characterised in that** the intermediate cover (3) carries a rotating transmission member (33) driven in rotation by the upper motorised casing (4) and driving in rotation the rotating work accessory (57) arranged in the work container (2).

5. Household electrical appliance for preparing food according to one of claims 1 to 4, **characterised in that** the intermediate cover (3) comprises an annular seal (9) peripherally bearing inside the work container (2) and **in that** the evacuation (97) opens above the annular seal (9).

6. Household electrical appliance for preparing food according to claim 5, **characterised in that** the annular seal (9) comprises an annular lip (92) peripherally bearing inside the work container (2).

7. Household electrical appliance for preparing food according to claim 6, **characterised in that** the annular seal (9) comprises another annular lip (93) extending above the annular lip (92).

8. Household electrical appliance for preparing food according to one of claims 1 to 7, **characterised in that** the inlet (96) has a side indentation (94) arranged between the deflecting side wall (31) and the rotating axis (58).

9. Household electrical appliance for preparing food according to one of claims 1 to 8, **characterised in that** the evacuation (97) opens into an outer side wall (32) of the intermediate cover (3).

10. Household electrical appliance for preparing food according to one of claims 1 to 9, **characterised in that** the work container (2) has a bottom (25) and comprises a centring member (28) raising from the bottom (25), and **in that** the rotating work accessory (57) is mounted on the centring member (28).

11. Household electrical appliance for preparing food according to one of claims 1 to 10, **characterised in that** it comprises an electrical heating device (6) for heating the food contained in the work container (2).

12. Household electrical appliance for preparing food according to one of claims 1 to 11, **characterised in that** it comprises a base (1) receiving the work container (2).

13. Household electrical appliance for preparing food according to claims 11 and 12, **characterised in that** the electrical heating device (6) is carried by the work container (2) and **in that** the base (1) comprises an electrical heating connector (15) for electrically supplying the electrical heating device (6) when the work container (2) is arranged on the base (1).

14. Household electrical appliance for preparing food according to one of claims 1 to 13, **characterised in that** the intermediate cover (3) has another evacuation conduit (95') connecting the work enclosure (8) to the outside of the appliance, the other evacuation conduit (95') comprising another inlet (96') communicating with the work enclosure (8) and another evacuation (97') communicating with the outside of the appliance, the other inlet (96') being arranged between the deflecting side wall (31) and the rotating axis (58).

15. Household electrical appliance for preparing food according to claim 14, **characterised in that** the rotating axis (58) is arranged between the inlet (96) and the other inlet (96').
